Europäisches Patentamt

European Patent Office

Office européen des brevets

(11) Numéro de publication: **0 390 014**
**A1**

## (12) DEMANDE DE BREVET EUROPEEN

(21) Numéro de dépôt: 90105679.6

(22) Date de dépôt: 26.03.90

(51) Int. Cl.⁵: **H02P 6/02, H02P 8/00**

(30) Priorité: 30.03.89 FR 8904167

(43) Date de publication de la demande:
03.10.90 Bulletin 90/40

(84) Etats contractants désignés:
BE DE ES FR GB IT

(71) Demandeur: ALCATEL ESPACE
11, avenue Dubonnet
F-92407 Courbevoie Cédex(FR)

(72) Inventeur: Capel, Antoine
241 Résisdence les Coteaux
F-31520 Ramonville(FR)
Inventeur: Marpinard, Jean-Claude
c/o Alcatel Espace, Boîte Poscale 1187
F-31037 Toulouse Cedex(FR)

(74) Mandataire: Weinmiller, Jürgen et al
Lennéstrasse 9 Postfach 24
D-8133 Feldafing(DE)

(54) Module de puissance pour électronique de commande de moteur continu.

(57) La présente invention se rapporte à un module
de puissance pour électronique de commande de
moteur continu, comprenant une cellule de puissance (11) contrôlée en courant crête (15) de type
abaisseur, bidirectionnelle en courant avec un étage
pont (12) également bidirectionnel et dont l'élément
réactif est l'un des enroulements (14) du moteur
continu.
Application notamment au domaine spatial.

FIG.1

EP 0 390 014 A1

## Module de puissance pour électronique de commande de moteur continu

L'invention se rapporte à un module de puissance pour électronique de commande de moteur continu.

Dans le domaine spatial on a de plus en plus affaire à des équipements mobiles : équipements de pointage et de déploiement d'antennes, équipements de pointage de caméra, équipements de robotique... L'invention répond au besoin de développement d'une chaîne de commande complète utilisable pour ces diverses applications.

L'invention a pour objet un module de puissance pour électronique de commande de moteur continu, caractérisé en ce qu'il comprend successivement :
- un étage de puissance bidirectionnel en courant délivrant, à partir d'une source de tension non régulée, une impulsion de tension de durée variable et un courant dont l'amplitude est contrôlée ;
- et un étage pont, également bidirectionnel, à commutateurs bidirectionnels, dont l'élément réactif est l'un des enroulements du moteur ; en ce que le courant qui circule dans cet enroulement est un courant de forme triangulaire ; et en ce que le contrôle du positionnement du moteur sur un pas entier ou sur un micro-pas s'effectue par un asservissement de ce courant dans l'enroulement, selon une consigne de référence qui est de type sinusoïdal.

Avantageusement le courant dans ledit module a des caractéristiques bidirectionnelles. De plus son principe de fonctionnement associe simultanément le courant crête et le courant moyen dans l'enroulement.

Avantageusement le contrôle du courant crête assure la protection du dispositif contre d'éventuelles surintensités destructrices, un fonctionnement avec une grande dynamique et une bonne marge de stabilité.

Avantageusement la caractéristique bidirectionnelle en courant permet d'assurer une impédance constante à la charge, et un fonctionnement de type quatre quadrants (quadrature entre tensions et courants) indispensable pour autoriser des freinages et accélérations importants associant dynamique et rendement énergétique.

Les caractéristiques et avantages de l'invention ressortiront d'ailleurs de la description qui va suivre, à titre d'exemple non limitatif, en référence aux figures annexées sur lesquelles :
- la figure 1 illustre le module selon l'invention ;
- la figure 2 illustre une réalisation d'un circuit du module selon l'invention.

Les moteurs continus, par exemple pas à pas, ont des caractéristiques dynamiques telles qu'ils présentent des risques de décrochage en cours de fonctionnement si la commande est mal adaptée à la charge. Les performances des automatismes utilisant ces moteurs dépendent donc des caractéristiques de ces moteurs, de leurs charges et également de la qualité de l'électronique de commande. L'amplification des signaux de commande est donc adaptée au principe retenu pour l'électronique de commande.

Cette dernière peut être :
- une répartition judicieuse d'impulsions dans le temps, ces impulsions étant générées par un système à logique cablée ou par microprocesseur ;
- la génération de signaux analogiques de type sinusoïdale pour induire un courant de même type dans l'enroulement du moteur, ces signaux correspondant à une commande optimale élaborée par une logique cablée ou par microprocesseur.

L'électronique de commande peut être conçue pour un fonctionnement en boucle ouverte (charge constante et connue) ou en boucle fermée.

. La commande peut être directe : le commutateur de puissance est alors directement commandé par un signal logique. Cet organe de puissance peut être constitué de un, deux ou quatre transistors. Une commande à quatre quadrants (pont à transistors) est nécessaire pour les moteurs à courant continu possédant un mode freinage et arrêt.

Il existe alors plusieurs solutions pour obtenir un asservissement du courant par découpage :
- utilisation d'une cellule PWM ("Pulse Wave Modulator") : une image de la valeur moyenne du courant est envoyée sur un amplificateur d'erreur et module la durée de conduction. Cette solution implique une fréquence fixe et apporte une bonne précision.
- Durée de blocage fixe : Quand le courant excède la valeur de consigne, les transistors inférieurs sont bloqués pendant une durée fixe. Il en résulte une fréquence de découpage variable.
- Période de découpage fixe : Les transistors inférieurs sont bloqués lorsque le courant moyen dépasse la valeur de consigne mais sont ensuite réactivés à fréquence fixe.

. La commande peut être indirecte : Elle consiste à interfacer l'électronique de commande et l'enroulement du moteur par un convertisseur digital-analogique, un régulateur de tension ou courant alimentant un pont à transistors.

A partir d'un réseau de tension continu VB, qui peut varier, une cellule "PWM" abaisseuse constituée d'un interrupteur, réalisé par exemple par un transistor et une diode, alimente un pont à transistors et l'enroulement du moteur. Le transistor interrupteur impose sur l'enroulement une tension V fonction du rapport cyclique de conduction $\gamma$ , tel que : $V = \gamma V_B$

Le rapport cyclique $\gamma$ peut être contrôlé directement par une consigne sinusoïdale ou par un asservissement, le paramètre régulé étant le courant d'entrée i. Cette information i peut permettre la protection du système contre les surintensités en ouvrant le transistor interrupteur.

Ces systèmes sont unidirectionnels en ce sens que le courant i évolue toujours de l'entrée vers le moteur.

La commande selon l'invention est une commande de ce type mais bidirectionnelle en sens.

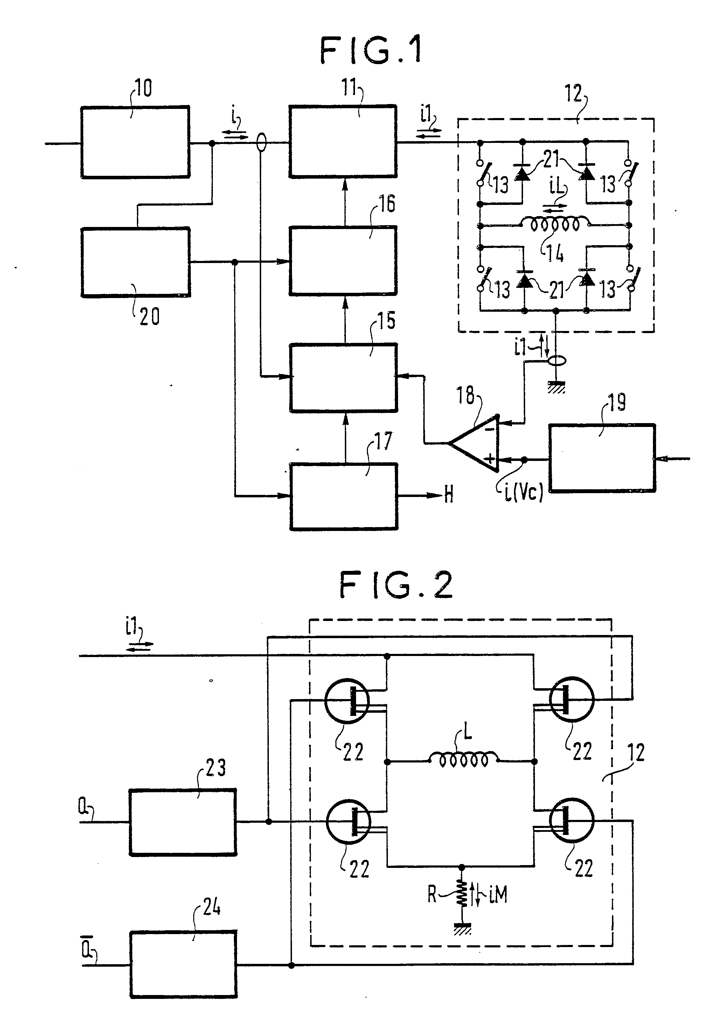

Le module selon l'invention, représenté sur la figure 1, comporte ainsi successivement :
- un filtre d'entrée 10 ;
- un étage de puissance 11 bidirectionnel en courant délivrant, à partir d'une source de tension non régulée, une impulsion de tension de durée variable et un courant dont l'amplitude est contrôlée ;
- un étage 12 pont à commutateurs bidirectionnels 13, représentés schématiquement par des interrupteurs sur la figure, excités en diagonale et reliés à l'enroulement 14 du moteur à commander qui est un moteur continu, par exemple pas à pas : chaque commutateur bidirectionnel 13 étant associé à une diode 21.

Ce module comporte en outre :
- une cellule 15 de commande en courant reliée à l'étage de puissance par l'intermédiaire d'un étage "driver" 16 et qui reçoit un signal issu d'un module horloge 17, un signal sortant du filtre d'entrée 10 et un signal sortant d'un amplificateur d'écart 18 qui reçoit une valeur de consigne de courant i (Vc) délivrée par un convertisseur numérique-analogique 19 et une valeur de courant issue du pont 12.
- un convertisseur continu-continu 20 disposé en sortie du filtre d'entrée et qui pilote le module horloge 17 et l'étage "driver" 16.

Le module selon l'invention permet de générer un courant iL dans l'enroulement 14 d'un moteur continu ; en fonction du sens et de la forme de ce courant iL, on obtient un positionnement du moteur qui fonctionne par impulsions.

L'amplificateur de puissance pour la commande du moteur selon l'invention associe une cellule de puissance contrôlée en courant crête de type abaisseur, bidirectionnelle en courant, avec un étage pont également bidirectionnel et dont l'élément réactif est l'un 14 des enroulements du moteur. Le courant iL qui circule dans l'enroulement du moteur est le paramètre que l'on va réguler, en le comparant à une valeur de consigne. Ce courant iL peut ici circuler dans les deux sens.

L'étage de puissance 11 permet d'obtenir un courant de forme triangulaire variant entre une valeur minimum im et une valeur maximum iM qui peut atteindre des valeurs telles qu'elles soient destructrices pour les éléments utilisés ; les discontinuités de fonctionnement étant dues aux diodes 21 : En effet, grâce à l'étage de puissance 11 on génère une impulsion de durée variable $\tau$ qui est envoyée sur l'étage pont 12 : On obtient alors un courant en dent de scie dans l'enroulement 14 qui, a l'intérieur de chaque période, comporte deux parties linéaires de pentes opposées : la première de la forme

$$\frac{V - V_o}{L} \, t$$

pendant la charge et la seconde $- \dfrac{V_o}{L} \, t$

pendant la décharge (du fait des diodes 21). On peut controler l'amplitude de ce courant en jouant sur la durée $\tau$.

On limite les valeurs de courant utilisé à des valeurs non destructrices en régulant la valeur de courant crête : On obtient alors une protection en courant même en cas de court-circuit : Une image de la valeur moyenne du courant est envoyée sur l'amplificateur d'erreur 18 pour y être comparée à une valeur de consigne i (Vc). Elle permet de moduler la valeur de conduction. Le contrôle du positionnement du moteur sur un pas entier ou un micro-pas s'effectue donc par un asservissement du courant dans l'enroulement selon la consigne de référence i (Vc) qui est de type sinusoïdal.

Avantageusement dans le module de l'invention on contrôle simultanément le courant crête et le courant moyen dans l'enroulement 14. De plus le courant iL peut circuler dans les deux directions :

- Le contrôle du courant crête assure la protection du dispositif contre d'éventuelles surintensités destructrices, un fonctionnement avec une grande dynamique et une bonne marge de stabilité (le système est équivalent à un premier ordre excité par une source de courant).
- La caractéristique bidirectionnelle en courant permet d'assurer une impédance constante à la charge, et un fonctionnement de type quatre quadrants (quadrature entre tensions et courants) indispensable pour autoriser des freinages et accélérations importants associant dynamique et rendement énergétique. De plus le double sens possible du courant i permet de récupérer l'énergie en excès vers le filtre d'entrée.
- Le moteur peut être amené à se positionner rapidement. On a, en effet, une loi de fonctionnement variable (accélération, décélération) ce qui permet d'obtenir une quadrature courant-tension. Le moteur est désactivé sur commande ou en cas de danger (butée).

Dans un exemple de réalisation représenté sur la figure 2, les commutateurs 13 et diodes 21 du pont 12 sont remplacés par des transistors 22 de type HEXFET (transistors à effet de champ conducteur dans les deux sens). Ces transistors 22 sont, deux à deux, reliés à deux étages de commande flottante 23 et 24, correspondant à chaque sens du courant, qui reçoivent respectivement deux commandes opposées Q et $\overline{Q}$.

Dans un emploi en domaine spatial, une telle commande analogique selon l'invention a pour but d'appliquer, par exemple, la loi de commande logique correspondant à un fonctionnement optimal d'une antenne mobile aux moteurs continus qui commandent le positionnement de celle-ci. Un tel ensemble électronique comprend donc une interface numérique-analogique et une fonction de puissance qui contrôle le couple électromagnétique de chaque moteur en prélevant l'énergie nécessaire à la plateforme du satellite.

Ainsi une information digitale en provenance du module logique est appliquée au convertisseur digital-analogique 19 qui permet de générer un signal de forme sinusoïdale. Cette fonction sinusoïdale est transformée en une fonction sinusoïdale redressée associée à un signal binaire définissant son signe. Ce partage de l'information originale est nécessaire car ces deux signaux vont être appliqués à des organes distincts de la fonction de puissance pour asservir le courant circulant dans l'enroulement 14 d'un moteur à une valeur proportionnelle à l'amplitude de la fonction sinusoïdale.

L'asservissement de la sinusoïde redressée est réalisé par une fonction de régulation 11 utilisant un module de contrôle en courant 15, l'induction de la structure de puissance étant l'enroulement 14 du moteur. La circulation de courant iL positif et négatif dans cet enroulement 14 est obtenue par l'activation de l'une des deux branches d'un pont 12 à transistors.

Les modules de la commande analogique sont connectés sur la distribution électrique du satellite au travers du filtre d'entrée 10. Le courant absorbé pendant les transitoires, ou en cas de défaillance de l'électronique ou du moteur est limité par le principe du contrôle en courant. L'orientation du courant dans la bobine moteur 14 est commandée par le pont de transistor 12. Le convertisseur continu-continu 20 assure la distribution des tensions auxiliaires et horloge de pilotage aux divers modules analogiques et au module logique.

Le fonctionnement décrit ci-dessus peut être appliqué au pilotage des deux moteurs pas à pas, chaque moteur contrôlant l'un des deux axes d'une antenne mobile, en utilisant la technique des micropas.

Cette dernière implique un contrôle du couple électromagnétique de chaque moteur en ses deux composantes qui sont les courants traversant les deux enroulements.

Si $i_1$ et $i_2$ sont les amplitudes de ces courants, on aura :

$i_1 = I \sin \alpha t$
$i_2 = I \cos \alpha t$

I et $\alpha$ étant deux paramètres définis par la loi de commande. Comme l'antenne mobile implique le contrôle en couple des deux moteurs, le module de commande analogique devra à chaque instant assurer les asservissements en courants suivants

$i_{1X} = I \sin \alpha t$
$i_{1Y} = I \sin \beta t$
$i_{2X} = I \cos \alpha t$
$i_{2Y} = I \cos \beta t$

X, Y indiquant les axes du mécanisme et I, $\alpha$, $\beta$ étant les paramètres de la loi de commande.

Le fonctionnement non redondé de l'électronique de puissance de l'antenne mobile exige la participation de quatre modules identiques assurant l'asservissement de quatre courants indépendants suivant les informations digitales du module logique.

La redondance de l'électronique de commande sur les enroulements redondants des moteurs pas à pas implique la duplication de toutes ces fonctions.

De par sa conception électrique basée sur une structure de puissance contrôlée en courant, chaque module analogique assure l'asservissement du courant dans un enroulement, selon une consigne déterminée, quelque soit la tension du réseau électrique du satellite (26,5 à 42,5 volts).

Le fonctionnement de type échantillonné de la structure de puissance, utilisant des interrupteurs de type MOS-FET, permet de garantir des rendements meilleurs que 85% dans les conditions extrêmes d'utilisation.

Une consigne triangulaire peut être choisie pour cette expérimentation, car elle permet de vérifier le comportement de l'asservissement à des discontinuités de commande.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1/ Module de puissance pour électronique de commande de moteur continu, caractérisé en ce qu'il comprend successivement :
- un étage de puissance (11) bidirectionnel en courant délivrant, à partir d'une source de tension non régulée, une impulsion de tension de durée variable et un courant dont l'amplitude est contrôlée ;

- et un étage pont (12), également bidirectionnel, à commutateurs bidirectionnels (13), dont l'élément réactif est l'un (14) des enroulements du moteur ; et en ce que le courant (iL) qui circule dans cet enroulement est un courant de forme triangulaire ; et en ce que le contrôle du positionnement du moteur sur un pas entier ou sur un micro-pas s'effectue par un asservissement de ce courant dans l'enroulement (14), selon une consigne de référence qui est de type sinusoïdal.

2/ Module selon la revendication 1, caractérisé en ce qu'il comprend
- un filtre d'entrée (10) ;
- l'étage de puissance (11) bidirectionnel en courant ;
- l'étage (12) pont à commutateurs bidirectionnels (13) excités en diagonale et reliés à l'enroulement (14) du moteur à commande.

3/ Module selon la revendication 2, caractérisé en ce qu'il comprend une cellule (15) de commande en courant reliée à l'étage de puissance par l'intermédiaire d'un étage "driver" (16) et qui reçoit un signal issu d'un module horloge (17), un signal sortant du filtre d'entrée (10) et un signal sortant d'un amplificateur d'écart (18) qui reçoit une valeur de consigne de courant i (Vc) délivrée par un convertisseur numérique-analogique (19) et une valeur de courant issue du pont (12)

4/ Module selon l'une quelconque des revendications 1 ou 2, caractérisé en ce qu'il comprend un convertisseur continu-continu (20) disposé en sortie du filtre d'entrée et qui pilote le module horloge (17) et l'étage "driver" (16).

5/ Module selon l'une quelconque des revendications précédentes, caractérisé en ce que le moteur est un moteur pas à pas.

6/ Module selon l'une quelconque des revendications, caractérisé en ce que l'étage pont (12) est formé de quatre transistors à effet de champ (22) conducteurs dans les deux sens, deux à deux, reliés à deux étages de commande flottante correspondant à chaque sens du courant iL dans l'enroulement (14) du moteur.

7/ Module de puissance selon l'une quelconque des revendications précédentes, caractérisé en ce qu'il est associé à un senseur de courant discret et un module de commande capable de contrôler le courant crête bidirectionnel, permettant de ce fait de protéger et dimensionner les éléments bidirectionnels contre des surintensités destructives.

# FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | PATENT ABSTRACTS OF JAPAN<br>vol. 11, no. 265 (E-535)(2712) 27 août 1987,<br>& JP-A-62 68096 (FUJITSU) 27 mars 1987,<br>* le document en entier *<br>--- | 1 | H02P6/02<br>H02P8/00 |
| Y | EP-A-0078394 (SIEMENS)<br>* page 3, ligne 9 - page 4, ligne 12; figure 1 *<br>--- | 1 | |
| A | US-A-4677356 (H. TSUNEDA ET AL.)<br>* le document en entier *<br>----- | 1 | |

DOMAINES TECHNIQUES
RECHERCHES (Int. Cl.5 )

H02P6/00
H02P8/00

Le présent rapport a été établi pour toutes les revendications

| Lieu de la recherche | Date d'achèvement de la recherche | Examinateur |
|---|---|---|
| BERLIN | 16 MAI 1990 | GESSNER E.A.F. |